# EUROPEAN PATENT APPLICATION

(11) **EP 4 618 171 A1**
(43) Date of publication of application: **17.09.2025**
(21) Application number: 24854312.6
(22) Date of filing: 09.07.2024
(51) Int. Cl.: H01M 4/04, B05C 11/10

(54) **ELECTRODE PRODUCTION APPARATUS AND BATTERY CELL COMPRISING ELECTRODES PRODUCED BY USING SAME, AND BATTERY PACK AND VEHICLE COMPRISING BATTERY CELLS**

(30) Priority: 11.08.2023 KR 20230105892
(71) Applicant: LG Energy Solution, Ltd., Seoul 07335 (KR)
(72) Inventor: HAN, Yoon-ju, Daejeon 34122 (KR); AHN, Byoung-Hoon, Daejeon 34122 (KR)
(74) Representative: Goddar, Heinz J.
(86) International application number: PCT/KR2024/009791
(87) International publication number: WO 2025/037760

(57) **Abstract**

Disclosed are an electrode production device, a battery cell including an electrode produced using the same, and a battery pack and a vehicle including the battery cell. An electrode production device according to an embodiment of the present disclosure, which produces an electrode by transferring an electrode foil where a coating layer is formed, includes a transfer member that transfers the electrode foil on which the coating layer is formed; a fluid spray member that sprays fluid toward the electrode foil to prevent wrinkles from forming on the electrode foil; and a fluid supply member that is coupled to the fluid spray member and supplies fluid to the fluid spray member.

## Description

### TECHNICAL FIELD

The present application claims priority to Korean Patent Application No. 10-2023-0105892 filed on August 11, 2023 in the Republic of Korea, the disclosures of which are incorporated herein by reference.

The present disclosure relates to an electrode production device, a battery cell including an electrode produced using the same, and a battery pack and a vehicle including the battery cell, and more specifically, to an electrode production device capable of improving electrode quality, a battery cell including an electrode produced using the same, and a battery pack and a vehicle including the battery cell.

### BACKGROUND ART

In general, a secondary battery refers to a battery that can be repeatedly charged and discharged, such as a lithium-ion battery, a lithium polymer battery, a nickel cadmium battery, a nickel hydrogen battery, a nickel zinc battery, and the like.

Depending on the shape of the battery case, a secondary battery may be classified into a cylindrical battery and a prismatic battery in which the electrode assembly is embedded in a cylindrical or prismatic metal can, and a pouch-type battery in which the electrode assembly is embedded in a pouch-type case made of an aluminum laminate sheet.

Such a secondary battery may be manufactured by accommodating an electrode assembly including a positive electrode and a negative electrode that are mutually stacked with a separator interposed therebetween, and an electrolyte material in a case of various shapes, and sealing the case.

The electrode (positive electrode or negative electrode) of the secondary battery may include a coated portion where a coating layer is formed by pressing an electrode mixture on the surface of an electrode foil, and an uncoated portion where the coating layer is not formed.

Meanwhile, the electrode of the secondary battery may be produced through a roll-to-roll process in which an electrode foil having a coating layer formed on the surface is manufactured by being wound around a roll and a roll and moved.

However, when the electrode foil on which the coating layer is formed is transferred in a roll-to-roll method to produce the electrode, wrinkles may form in the electrode foil (e.g., the uncoated portions of both ends of the electrode foil), and the center of the electrode foil may deviate from the correct position.

If wrinkles form in the uncoated portions of both ends of the electrode foil, or if the center of the electrode foil deviates from the correct position, there is a problem of degrading the quality of the electrode.

### DISCLOSURE

### Technical Problem

The present disclosure is designed to solve the problems of the related art, and therefore the present disclosure is directed to providing an electrode production device capable of improving electrode quality by preventing wrinkles from forming on the electrode foil where a coating layer is formed during transfer of the electrode foil, a battery cell including an electrode produced using the same, and a battery pack and a vehicle including the battery cell.

The present disclosure is also directed to providing an electrode production device capable of improving electrode quality by preventing the center of the electrode foil from deviating from the correct position during transfer of the electrode foil, a battery cell including an electrode produced using the same, and a battery pack and a vehicle including the battery cell.

However, technical problems to be solved by the present disclosure are not limited to the above-described problems, and other problems not mentioned herein may be clearly understood by those skilled in the art from the following description of the present disclosure.

### Technical Solution

According to one aspect of the present disclosure, there may be provided an electrode production device, which produces an electrode by transferring an electrode foil where a coating layer is formed, including a transfer member that transfers the electrode foil on which the coating layer is formed; a fluid spray member that sprays fluid toward the electrode foil to prevent wrinkles from forming on the electrode foil; and a fluid supply member that is coupled to the fluid spray member and supplies fluid to the fluid spray member.

In an embodiment, the fluid spray member may be disposed below the electrode foil.

In an embodiment, the fluid spray member may include a body coupled to the fluid supply member; and a plurality of spray nozzles formed on the body to spray the fluid.

In an embodiment, the spray nozzle may be formed to be inclined toward the electrode foil.

In an embodiment, the spray angle of the spray nozzle may be adjusted.

In an embodiment, the spray amount of fluid sprayed from the spray nozzle may be adjusted.

In an embodiment, the electrode production device may further include a suction nozzle formed on the body so as to suck the electrode foil.

In an embodiment, the suction nozzle may be formed alternately with the spray nozzle on the body.

In an embodiment, the electrode production device may include a position sensing unit spaced apart from the fluid spray member and installed on at least one of both ends of the electrode foil.

In an embodiment, the spray angle of the spray nozzle may be adjusted according to the position of the electrode foil sensed by the position sensing unit.

In an embodiment, the position sensing unit may sense the position of the electrode foil based on whether the center of the electrode foil deviates, and the spray angle of the spray nozzles located on the left and right sides of the center of the electrode foil, respectively, among the plurality of spray nozzles may be adjusted.

In an embodiment, the electrode production device may include a position sensing unit spaced apart from the fluid spray member and installed on at least one of both ends of the electrode foil.

In an embodiment, the spray amount of the spray nozzle may be adjusted according to the position of the electrode foil sensed by the position sensing unit.

In an embodiment, the position sensing unit may sense the position of the electrode foil based on whether the center of the electrode foil deviates, and the spray amount of the spray nozzles located on the left and right sides of the center of the electrode foil, respectively, among the plurality of spray nozzles may be adjusted.

Meanwhile, according to another aspect of the present disclosure, there may be provided a battery cell including an electrode produced using an electrode production device described above, there may also be provided a battery pack including at least one battery cell described above, and there may also be provided a vehicle including at least one battery cell described above.

### Advantageous Effects

Embodiments of the present disclosure have the effect of improving electrode quality by preventing wrinkles from forming on the electrode foil where a coating layer is formed during transfer of the electrode foil.

Additionally, embodiments of the present disclosure have the effect of improving electrode quality by preventing the center of the electrode foil from deviating from the correct position during transfer of the electrode foil.

However, the effects to be obtained by the present disclosure are not limited to the above-described effects, and other technical effects not mentioned herein may be clearly understood by those skilled in the art from the following description of the present disclosure.

### DESCRIPTION OF DRAWINGS

The accompanying drawings illustrate a preferred embodiment of the present disclosure and together with the foregoing disclosure, serve to provide further understanding of the technical features of the present disclosure, and thus the present disclosure is not construed as being limited to the drawing.
FIG. 1 is a schematic perspective view of an electrode production device according to a first embodiment of the present disclosure.
FIG. 2 is a side view of FIG. 1.
FIG. 3 is a cross-sectional view taken along line A-A' of FIG. 1, with the roller and the fluid supply member omitted.
FIG. 4 is a view showing a state in which the spray nozzle is formed to be inclined in FIG. 3.
FIG. 5 is a schematic perspective view of an electrode production device according to a second embodiment of the present disclosure.
FIG. 6 is a cross-sectional view taken along line B-B' of FIG. 5, with the roller and the fluid supply member omitted.
FIG. 7 is a view showing a state in which the spray nozzle is formed to be inclined in FIG. 6.

FIG. 8 is a schematic perspective view of an electrode production device according to a third embodiment of the present disclosure.
FIG. 9 is a cross-sectional view taken along line C-C' of FIG. 8, with the roller and the fluid supply member omitted.
FIG. 10 is a view showing a state in which the spray angle of the spray nozzle is adjusted when the center of the electrode foil deviates from FIG. 9.
FIG. 11 is a modified embodiment of FIG. 10, showing a state in which the spray amount of the spray nozzle is adjusted when the center of the electrode foil deviates.
FIG. 12 is a view schematically showing the configuration of a battery pack including a battery cell provided with an electrode produced using an electrode production device according to each embodiment of the present disclosure.
FIG. 13 is a view for describing a vehicle including the battery pack of FIG. 12.

### BEST MODE

Hereinafter, preferred embodiments of the present disclosure will be described in detail with reference to the accompanying drawings. The terms or words used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the embodiments described in this specification and the configurations shown in the drawings are only one of the most preferred embodiments of the present disclosure, not intended to entirely represent the technical aspects of the present disclosure, so it should be understood that various equivalents and modifications may be made thereto at the time of filing the present application.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted.

As used herein, the term 'coupling' or 'connection' refers to not only a case where one member and another member are directly coupled or directly connected, but also a case where one member is indirectly coupled or indirectly connected to another member through a joint member.

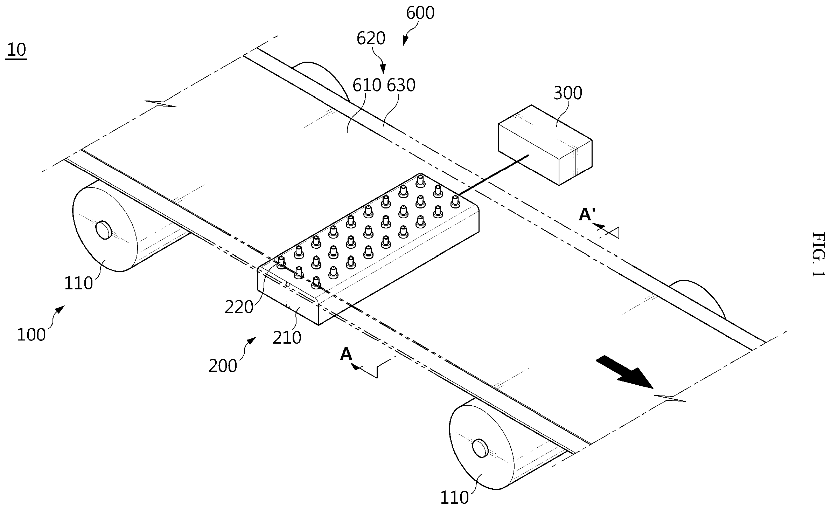

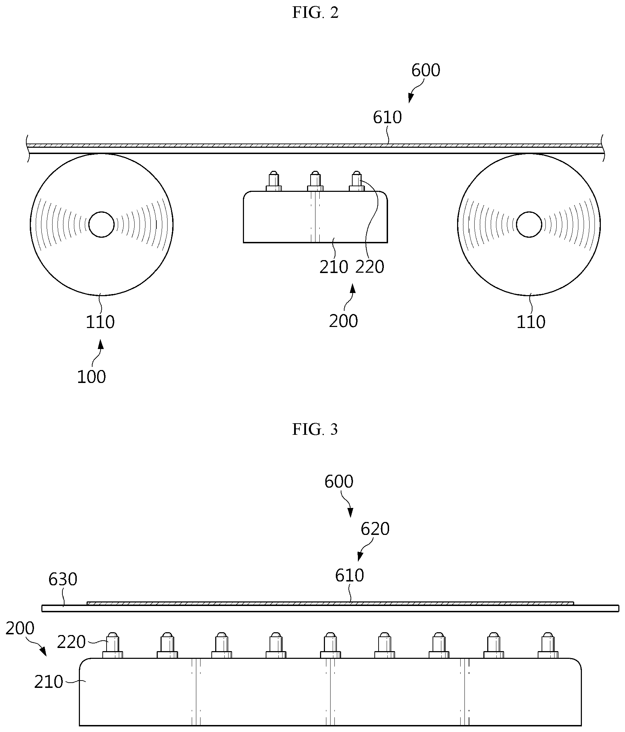

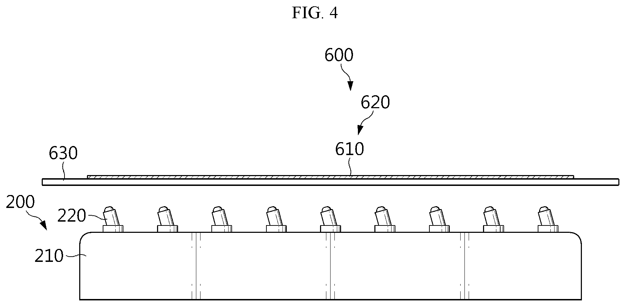

FIG. 1 is a schematic perspective view of an electrode production device according to a first embodiment of the present disclosure, FIG. 2 is a side view of FIG. 1, FIG. 3 is a cross-sectional view taken along line A-A' of FIG. 1, with the roller and the fluid supply member omitted, and FIG. 4 is a view showing a state in which the spray nozzle is formed to be inclined in FIG. 3.

Referring to FIG. 1, the electrode production device 10 according to a first embodiment of the present disclosure relates to a device for producing an electrode (positive electrode or negative electrode) by transferring an electrode foil 600 on which a coating layer 610 is formed. The electrode is a concept that includes both a wet electrode and a dry electrode.

For example, the wet electrode is manufactured through a process of applying an electrode mixture in a slurry state including a solvent to the surface of an electrode substrate such as the electrode foil 600 to form a coating layer 610 and drying the coating layer 610.

And, the dry electrode is manufactured through a process of pressing an electrode mixture in a powder (powder mixture) state that does not include a solvent onto the surface of the electrode foil 600 to form a coating layer 610. That is, the electrode mixture is mixed without a liquid medium such as a solvent or dispersion medium, and then the electrode mixture in a powder state is pressed while passing it through a rolling roll to manufacture the dry electrode.

Here, the electrode foil 600 may include a coated portion 620 in which a coating layer 610 is formed on the surface, and an uncoated portion 630 (e.g., both ends of the electrode foil 600) in which the coating layer 610 is not formed.

The electrode production device 10 according to the first embodiment of the present disclosure relates to a device capable of preventing wrinkles from forming on the electrode foil 600 while the electrode foil 600 is being transferred. Hereinafter, this will be described in detail.

Referring to FIG. 1, the electrode production device 10 according to the first embodiment of the present disclosure may be configured to include a transfer member 100, a fluid spray member 200, and a fluid supply member 300.

The transfer member 100 transfers the electrode foil 600 on which the coating layer 610 is formed. The transfer member 100 may be various, and may include, for example, a plurality of rollers 110 to transfer the electrode foil 600 in a roll-to-roll method. However, the transfer member 100 is not limited thereto, but hereinafter, an embodiment in which the transfer member 100 includes a plurality of rollers 110 will be described for convenience of description.

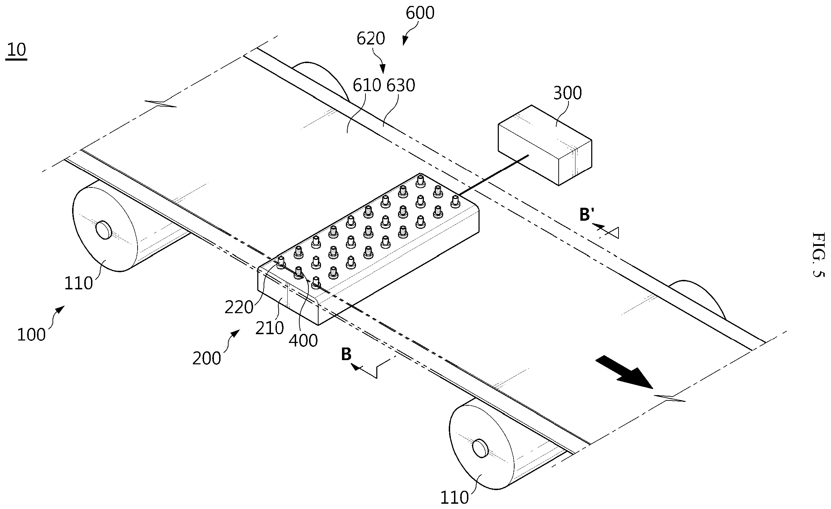

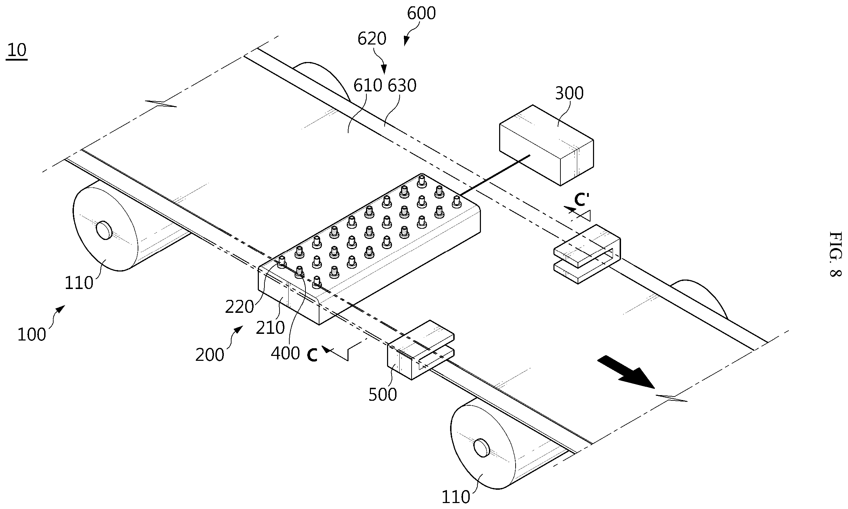

In FIG. 1, an arrow indicates the transfer direction of the electrode foil 600. Hereinafter, the same applies to FIGS. 5 and 8.

The fluid spray member 200 sprays fluid toward the electrode foil 600 to prevent wrinkles from forming on the electrode foil 600. For example, the fluid spray member 200 sprays fluid toward the electrode foil 600 to prevent wrinkles from forming on the uncoated portion 630, which is both ends of the electrode foil 600. Although wrinkles do not form only on the uncoated portion 630, lots of wrinkles may form particularly on the uncoated portion 630, which makes it important to prevent wrinkles from forming on the uncoated portion 630. However, this does not exclude preventing wrinkles from forming on the coated portion 620.

Referring to FIGS. 1 and 2, the fluid spray member 200 may be disposed below the electrode foil 600. That is, the fluid spray member 200 is disposed below the electrode foil 600 and sprays fluid toward the electrode foil 600. Then, as the fluid hits the electrode foil 600, the wrinkles of the electrode foil 600 are spread.

Referring to FIG. 1, the fluid spray member 200 may include a body 210 and a plurality of spray nozzles 220.

The body 210 is coupled to a fluid supply member 300 to receive fluid from the fluid supply member 300. The body 210 may have various shapes, and for example, may be a rectangular prism shape as in FIG. 1, but is not limited thereto.

And, a plurality of spray nozzles 220 may be formed on the body 210. When the body 210 is disposed below the electrode foil 600 as in FIGS. 1 and 2, the plurality of spray nozzles 220 may be formed on the upper surface of the body 210.

The plurality of spray nozzles 220 are formed on the body 210 and are provided to spray the fluid. Here, referring to FIGS. 3 and 4, the spray angle of the spray nozzle 220 may be adjusted. That is, the spray angle of the spray nozzle 220 may be adjusted toward the electrode foil 600 so that the spray nozzle 220 may spray to a preset position of the electrode foil 600. For example, the spray angle of the spray nozzle 220 may be adjusted from FIG. 3 to FIG. 4.

In FIG. 4, the spray angles of the plurality of spray nozzles 220 are adjusted so that all of the spray nozzles 200 face one direction (left direction based on FIG. 4). This case is an example of a case where wrinkles form only on the left side of the electrode foil 600 based on FIG. 4.

Additionally, if wrinkles form only on the right side of the electrode foil 600, the spray angles of the plurality of spray nozzles 220 are adjusted so that all of the spray nozzles 220 face the right side of the electrode foil 600 based on FIG. 4.

And, if wrinkles form on both sides of the electrode foil 600, that is, on both the left and right sides based on FIG. 4, the spray angles of the plurality of spray nozzles 220 may be adjusted so that the spray nozzles 220 located on the left side are tilted toward the left side and the spray nozzles 220 located on the right side are tilted toward the right side.

In another embodiment, the spray nozzle 220 may be formed and fixed to be inclined toward the electrode foil 600. In this case, the spray angle of the spray nozzle 220 is fixed with the slope formed without being adjusted. That is, unlike in FIG. 4 where all of the plurality of spray nozzles 220 are tilted toward one direction, the spray nozzles 220 on the left side based on FIG. 3 may be fixed to be inclined toward the left side, and the spray nozzles 220 on the right side based on FIG. 3 may be fixed to be inclined toward the right side.

In this way, when the spray nozzle 220 is formed to have an adjustable inclination angle, or when the spray nozzle 220 is formed to be inclined and fixed, the fluid may be sprayed from the center of the electrode foil 600 toward at least one of both ends, thereby immediately spreading the wrinkles formed on the electrode foil 600.

Alternatively, as a modified embodiment, the spray amount of fluid sprayed from the spray nozzle 220 may be adjusted according to the degree of wrinkles formed on the electrode foil 600. That is, the spray amount of fluid sprayed from the spray nozzle 220 may also be adjusted to correspond to the amount of wrinkles formed on the electrode foil 600.

The fluid supply member 300 is coupled to the fluid spray member 200 and supplies the fluid to the fluid spray member 200. The fluid supplied from the fluid supply member 300 may be various, and may be, for example, air, but is not limited thereto.

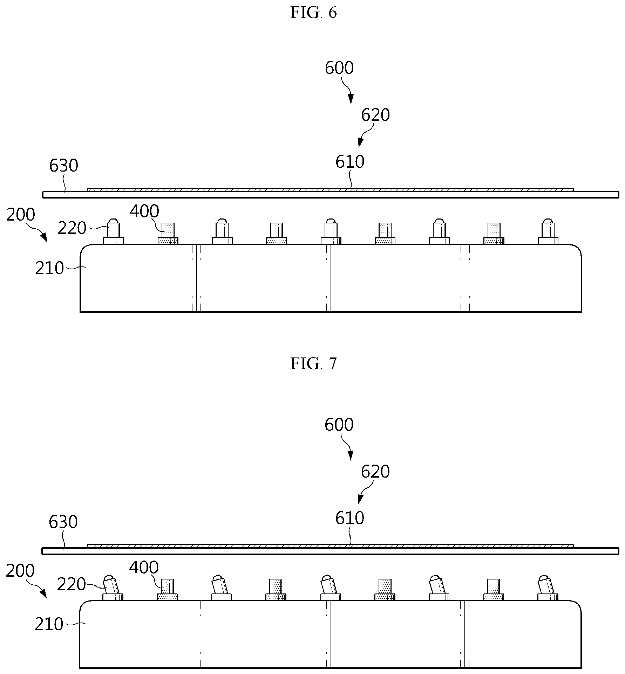

FIG. 5 is a schematic perspective view of an electrode production device according to a second embodiment of the present disclosure, FIG. 6 is a cross-sectional view taken along line B-B' of FIG. 5, with the roller and the fluid supply member omitted, and FIG. 7 is a view showing a state in which the spray nozzle is formed to be inclined in FIG. 6.

The second embodiment of the present disclosure differs in configuration from the first embodiment provided with only the spray nozzle 220 in that a suction nozzle 400 is further provided. Here, the contents common to the parts described in the first embodiment are replaced with the description of the first embodiment described above. Additionally, the contents applicable to the first embodiment among the parts described in the second embodiment may be applied to the first embodiment.

Referring to FIGS. 5 to 7, a suction nozzle 400 for sucking a fluid may be formed on the body 210. Here, the suction nozzle 400 is formed, for example, on the upper surface of the body 210 and is provided to suck the electrode foil 600. Hereinafter, for convenience of description, a case in which the suction nozzle 400 sucks air will be described.

When only the spray nozzle 220 is formed on the body 210, the center of the electrode foil 600 may deviate from the preset position as the electrode foil 600 moves left and right depending on the size of the electrode foil 600, the spray amount of fluid sprayed from the spray nozzle 220, the spray pressure, and the like. Alternatively, the electrode foil 600 may tremble.

In order to prevent the center of the electrode foil 600 from deviating from the preset position and to prevent the electrode foil 600 from trembling in this way, the suction nozzle 400 may be formed on the body 210.

Here, referring to FIGS. 5 and 6, the suction nozzle 400 may be formed alternately with the spray nozzle 220 on the body 210. That is, the spray nozzle 220 may be located between the plurality of suction nozzles 400, and the suction nozzle 400 may be located between the plurality of spray nozzles 220.

As described above, the spray nozzle 220 may be formed to have an adjustable inclination angle (see FIG. 7 in this embodiment), or may be formed to be inclined and fixed to spray fluid from the center of the electrode foil 600 toward both ends.

And, when the spray nozzle 220 sprays the fluid while being inclined in one direction or both directions, the suction nozzle 400 may be disposed in the vertical direction to suck air, thereby preventing the center of the electrode foil 600 from deviating from a preset position, and also preventing the electrode foil 600 from trembling. Of course, the spray nozzle 220 may spray the fluid while disposed in the same direction as the suction nozzle 400, that is, in the vertical direction, and at this time, the suction nozzle 400 may suck air.

Meanwhile, the suction nozzle 400 being disposed in the vertical direction is only one embodiment and is not necessarily limited thereto.

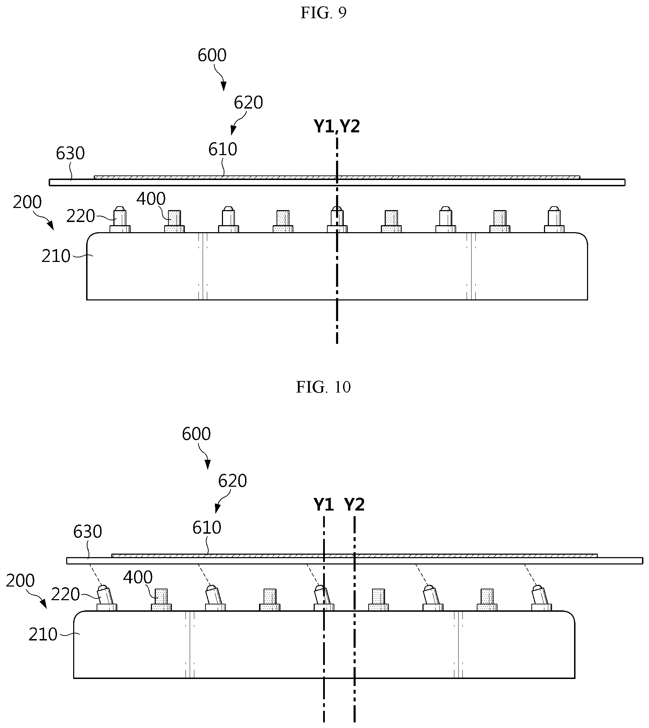

FIG. 8 is a schematic perspective view of an electrode production device according to a third embodiment of the present disclosure, FIG. 9 is a cross-sectional view taken along line C-C' of FIG. 8, with the roller and the fluid supply member omitted, and FIG. 10 is a view showing a state in which the spray angle of the spray nozzle is adjusted when the center of the electrode foil deviates from FIG. 9.

The third embodiment of the present disclosure differs in configuration from the first or second embodiment in that the spray angle of the spray nozzle 220 is adjusted according to the position of the electrode foil 600 sensed by the position sensing unit 500. Here, the contents common to the parts described in the first or second embodiment are replaced with the description of the first or second embodiment described above. Additionally, the contents applicable to the first or second embodiment among the parts described in the third embodiment may be applied to the first or second embodiment.

Referring to FIG. 8, the position sensing unit 500 may be spaced apart from the fluid spray member 200 and installed at both ends of the electrode foil 600. In FIG. 8, a pair of position sensing units 500 are installed at each of the both ends of the electrode foil 600, but are not necessarily limited thereto, and may be installed at only one of the both ends as needed.

The position sensing unit 500 may be disposed in front of the fluid spray member 200 based on the transfer direction of the electrode foil 600 (see the arrow in FIG. 8). However, the position sensing unit 500 may also be disposed at the rear of the fluid spray member 200 in FIG. 8.

The position sensing unit 500 senses the position of the electrode foil 600 to sense whether the center Y2 (see FIGS. 9 and 10) of the electrode foil 600 has deviated from the preset position Y1. To this end, the position sensing unit 500 may include various types of sensors.

And, the spray angle of the spray nozzle 220 may be adjusted according to the position of the electrode foil 600 sensed by the position sensing unit 500. That is, when the position of the center Y2 of the electrode foil 600 is sensed by the position sensing unit 500 to have deviated from the preset position Y1, the spray angle of the spray nozzle 220 may be adjusted by a control unit (not shown) connected to the position sensing unit 500, and then the fluid may be sprayed from the spray nozzle 220.

The position sensing unit 500 senses the position of the electrode foil 600 by sensing whether the center of the electrode foil 600 has deviated, and the spray angle of the spray nozzles 220 located on the left and right sides of the center of the electrode foil 600 among the plurality of spray nozzles 220 may be adjusted.

For example, referring to FIG. 9, the center Y2 of the electrode foil 600 and the preset position Y1 coincide, so that the center Y2 of the electrode foil 600 is sensed by the position sensing unit 500 as not deviating from the preset position Y1.

However, the electrode quality may be degraded if the center Y2 of the electrode foil 600 deviates from the preset position Y1 due to various causes as shown in FIG. 10, and thus, in order to prevent this, the spray angle of the spray nozzle 220 is adjusted to be tilted to the left based on FIG. 10 to spray the fluid.

And, due to this, as the electrode foil 600 moves to the left, the center Y2 of the electrode foil 600 coincides with the preset position Y1.

That is, the position sensing unit 500 senses whether the center Y2 of the electrode foil 600 deviates from the preset position Y1 as the electrode foil 600 moves left and right during transfer of the electrode foil 600.

And, when it is sensed that the center Y2 of the electrode foil 600 has deviated from the preset position Y1, the spray angle of the spray nozzle 220 is adjusted, and accordingly, the fluid is sprayed to accurately align the position of the electrode foil 600.

In this way, it is possible to prevent the center of the electrode foil 600 from deviating from the correct position during transfer of the electrode foil 600, and there is also an effect of improving the electrode quality.

Meanwhile, in FIG. 8, both the spray nozzle 220 and the suction nozzle 400 are formed on the body 210, but only the spray nozzle 220 may be formed on the body 210. In FIG. 8, the description of the suction nozzle 400 is replaced with the above description.

Meanwhile, a control unit (not shown) for adjusting the spray angle of the spray nozzle 220 according to the sensing signal of the position sensing unit 500 may be included.

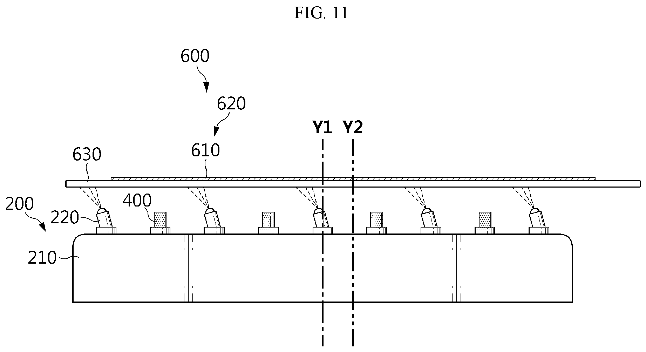

FIG. 11 is a modified embodiment of FIG. 10, showing a state in which the spray amount of the spray nozzle is adjusted when the center of the electrode foil deviates.

The modified embodiment of FIG. 11 differs from the third embodiment in that the spray amount of the spray nozzle 220 is adjusted when the center of the electrode foil 600 deviates due to the position of the electrode foil 600 sensed by the position sensing unit 500. Here, the contents common to the parts described in the third embodiment are replaced with the description of the third embodiment described above. Additionally, the contents applicable to the third embodiment among the parts described in the modified embodiment may be applied to the third embodiment.

The content in which the position sensing unit 500 is spaced apart from the fluid spray member 200 and installed at least on one of both ends of the electrode foil 600, and senses the position of the electrode foil 600 to sense whether the center Y2 (see FIGS. 9 and 10) of the electrode foil 600 deviates from the preset position Y1 is common to the third embodiment described above.

Here, referring to FIG. 11, the spray amount of the spray nozzle 220 may be adjusted according to the position of the electrode foil 600 sensed by the position sensing unit 500. That is, the position sensing unit 500 senses the position of the electrode foil 600, and accordingly, the spray amount of the spray nozzle 220 may be adjusted.

For example, when the center Y2 (see FIGS. 9 and 10) of the electrode foil 600 deviates significantly from the preset position Y1, a large amount of spray is adjusted to be sprayed from the spray nozzle 220.

And, when the center Y2 of the electrode foil 600 deviates slightly from the preset position Y1, a small amount of spray may be adjusted to be sprayed from the spray nozzle 220. Here, the small amount of spray may be based on the minimum amount capable of spreading the wrinkles of the electrode foil 600 and also preventing trembling.

Meanwhile, even in the modified embodiment of FIG. 11, the spray angle of the spray nozzle 220 may be adjusted. And, the control unit (not shown) may be configured to adjust the spray amount of the spray nozzle 220.

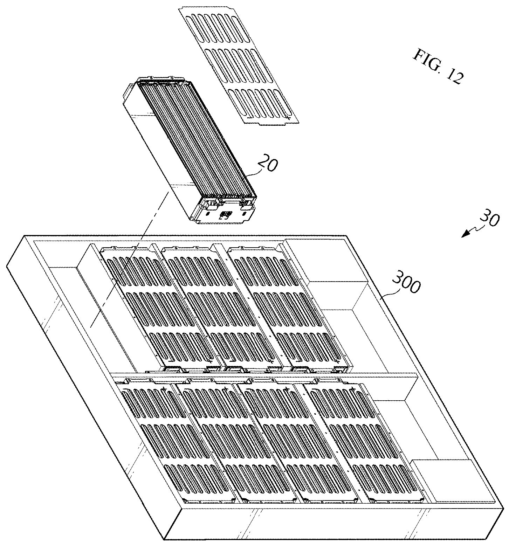

FIG. 12 is a view schematically showing the configuration of a battery pack including a battery cell provided with an electrode produced using an electrode production device according to each embodiment of the present disclosure.

Referring to FIG. 12, a battery pack 30 according to an embodiment of the present disclosure may include one or more battery cells 20. Here, the battery cell 20 includes an electrode produced using the electrode production device 10 according to each embodiment of the present disclosure as described above.

Additionally, the battery pack 30 may further include a pack housing 300 for accommodating the battery cell 20, various devices for controlling the charging and discharging of the battery cell 20, such as a BMS, a current sensor, a fuse, and the like.

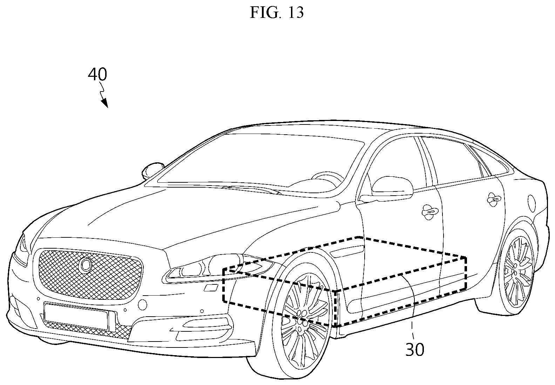

FIG. 13 is a view for describing a vehicle including the battery pack of FIG. 12.

Referring to FIG. 13, a vehicle 40 according to an embodiment of the present disclosure may include one or more battery cells 20 or battery packs 30 including an electrode produced using the electrode production device 10 according to each embodiment of the present disclosure. Here, the vehicle 40 includes various types of vehicles designed to use electricity, such as electric vehicles or hybrid vehicles.

The terms indicating directions as used herein such as upper, lower, left, and right are used for convenience of description only, and it is obvious to those skilled in the art that the term may change depending on the position of the stated element or an observer.

The present disclosure has been described hereinabove with reference to a limited number of embodiments and drawings, but the present disclosure is not limited thereto and it is obvious to those skilled in the art that a variety of modifications and changes may be made thereto within the technical aspects of the present disclosure and the equivalent scope of the appended claims. Therefore, the embodiments disclosed above should be considered from an illustrative perspective rather than a limiting perspective. That is, the scope of the true technical idea of the present disclosure is shown in the claims, and all differences within the scope of equivalents should be construed as being included in the present disclosure.

### INDUSTRIAL APPLICABILITY

The present disclosure relates to an electrode production device, a battery cell including an electrode produced using the same, and a battery pack and a vehicle including the battery cell, and is particularly applicable to industries related to secondary batteries.

## Claims

1. An electrode production device, which produces an electrode by transferring an electrode foil where a coating layer is formed, the electrode production device comprising:
a transfer member that transfers the electrode foil on which the coating layer is formed;
a fluid spray member that sprays fluid toward the electrode foil to prevent wrinkles from forming on the electrode foil; and
a fluid supply member that is coupled to the fluid spray member and supplies fluid to the fluid spray member.

2. The electrode production device according to claim 1,
wherein the fluid spray member is disposed below the electrode foil.

3. The electrode production device according to claim 1,
wherein the fluid spray member comprises:
a body coupled to the fluid supply member; and
a plurality of spray nozzles formed on the body to spray the fluid.

4. The electrode production device according to claim 3,
wherein the spray nozzle is formed to be inclined toward the electrode foil.

5. The electrode production device according to claim 4,
wherein the spray angle of the spray nozzle is adjusted.

6. The electrode production device according to claim 3,
wherein the spray amount of fluid sprayed from the spray nozzle is adjusted.

7. The electrode production device according to claim 3, further comprising:
a suction nozzle formed on the body so as to suck the electrode foil.

8. The electrode production device according to claim 7,
wherein the suction nozzle is formed alternately with the spray nozzle on the body.

9. The electrode production device according to claim 5, comprising:
a position sensing unit spaced apart from the fluid spray member and installed on at least one of both ends of the electrode foil.

10. The electrode production device according to claim 9,
wherein the spray angle of the spray nozzle is adjusted according to the position of the electrode foil sensed by the position sensing unit.

11. The electrode production device according to claim 10,
wherein the position sensing unit senses the position of the electrode foil based on whether the center of the electrode foil deviates, and
the spray angle of the spray nozzles located on the left and right sides of the center of the electrode foil, respectively, among the plurality of spray nozzles is adjusted.

12. The electrode production device according to claim 6, comprising:
a position sensing unit spaced apart from the fluid spray member and installed on at least one of both ends of the electrode foil.

13. The electrode production device according to claim 12,
wherein the spray amount of the spray nozzle is adjusted according to the position of the electrode foil sensed by the position sensing unit.

14. The electrode production device according to claim 13,
wherein the position sensing unit senses the position of the electrode foil based on whether the center of the electrode foil deviates, and
the spray amount of the spray nozzles located on the left and right sides of the center of the electrode foil, respectively, among the plurality of spray nozzles is adjusted.

15. A battery cell comprising an electrode produced using an electrode production device according to any one of claims 1 to 14.

16. A battery pack comprising at least one battery cell according to claim 15.

17. A vehicle comprising at least one battery cell according to claim 15.
